# FASCICULE DE BREVET EUROPEEN

(11) **EP 0 870 456 B1**
(45) Date de publication et mention de la délivrance du brevet: **12.03.2003**
(21) Numéro de dépôt: 98400857.3
(22) Date de dépôt: 08.04.1998
(51) Int. Cl.: A47J 27/21

(54) **Fond chauffant pour récipient destiné à recevoir de l'eau à chauffer, en particulier bouilloire**
Bodenheizung für Wasserhitzungsgerät, insbesondere Wasserkocher
Bottom heater for water heating vessel, in particular kettle

(30) Priorité: 10.04.1997 FR 9704412
(43) Date de publication de la demande: 14.10.1998
(73) Titulaire: SEB S.A., 69130 Ecully (FR)
(72) Inventeur: Berty, Didier, 74150 Massigny (FR); Miquelot, Gilles, 74150 Rumilly (FR)
(74) Mandataire: Keib, Gérard

(56) Documents cités:
- EP-A- 0 574 310
- EP-A- 0 656 740

## Description

La présente invention concerne un fond chauffant pour récipient destiné à recevoir de l'eau à chauffer, en particulier une bouilloire.

L'invention vise également une bouilloire comportant un tel fond chauffant. Une telle bouilloire est connu du document EP0574310. Une bouilloire d'un autre type est connue du document EP0656740.

Le fond chauffant est généralement réalisé sous forme d'une coupelle métallique dont la face supérieure est destinée à venir en contact avec l'eau, la face inférieure comportant un élément chauffant. Ce dernier présente deux bornes de sortie raccordées, pour sa connexion électrique, aux fils conducteurs d'un cordon d'alimentation. L'élément chauffant peut être une résistance tubulaire rapportée par brasage, soudage ou sertissage, ou bien une piste résistive sérigraphiée, dont les bornes de sortie se présentent alors sous forme de plages métalliques.

Un premier inconvénient des bouilloires à fond chauffant est, à l'usage, la formation d'un dépôt de tartre sur le fond de la coupelle, dû à la présence dans l'eau d'éléments minéraux et en particulier de calcaire. Cette propension à l'entartrage exige un entretien régulier du récipient, généralement à l'aide d'un acide organique.

Un autre inconvénient concerne les fonds chauffants à piste résistive: en effet, cette dernière doit être électriquement isolée du métal de la coupelle par un émail diélectrique, dont l'accrochage est facilité par la nature du métal utilisé, à savoir un acier inox ferritique. En contrepartie, ce dernier a une moins bonne tenue à la corrosion.

La présente invention a pour but de remédier à ces inconvénients.

Elle vise donc un fond chauffant pour récipient destiné à recevoir de l'eau à chauffer, en particulier une bouilloire, ce fond chauffant ayant une face supérieure destinée à venir en contact avec l'eau et une face inférieure portant un élément chauffant.

Suivant l'invention, ce fond chauffant est caractérisé en ce que ladite face supérieure est revêtue d'une couche d'or.

L'or présente l'avantage d'être compatible avec l'alimentation. D'autre part, il a été constaté que l'adhérence du tartre sur ce métal était beaucoup plus faible que sur l'acier et qu'il était facile de détacher ce tartre. Enfin, l'inertie chimique du revêtement or protège de la corrosion.

Selon un mode de réalisation préféré, la face supérieure du fond chauffant est revêtue d'une sous-couche d'argent recouvrant éventuellement une sous-couche de cuivre.

Avantageusement, lorsque la face inférieure du fond chauffant porte une résistance sérigraphiée, les plages permettant sa connexion électrique sont elles aussi dorées à l'or. Le passage du courant dans ces plages, qui conditionne le fonctionnement de l'élément chauffant, s'en trouve amélioré.

Le traitement de dorure de la face supérieure de la coupelle et des plages de la face inférieure se fait simultanément, par électrolyse ou dépôt chimique. On confère ainsi en une seule opération au fond chauffant des qualités anti-corrosion et anti-tartre sur une face et des propriétés conductrices améliorées sur l'autre face.

D'autres particularités et avantages de l'invention apparaîtront encore dans la description qui suit.

Aux dessins annexés donnés à titre d'exemples non limitatifs:
- la figure 1 est une vue schématique en coupe d'une bouilloire électrique à fond chauffant;
- la figure 2 est une vue à échelle agrandie du fond chauffant de la figure 1.

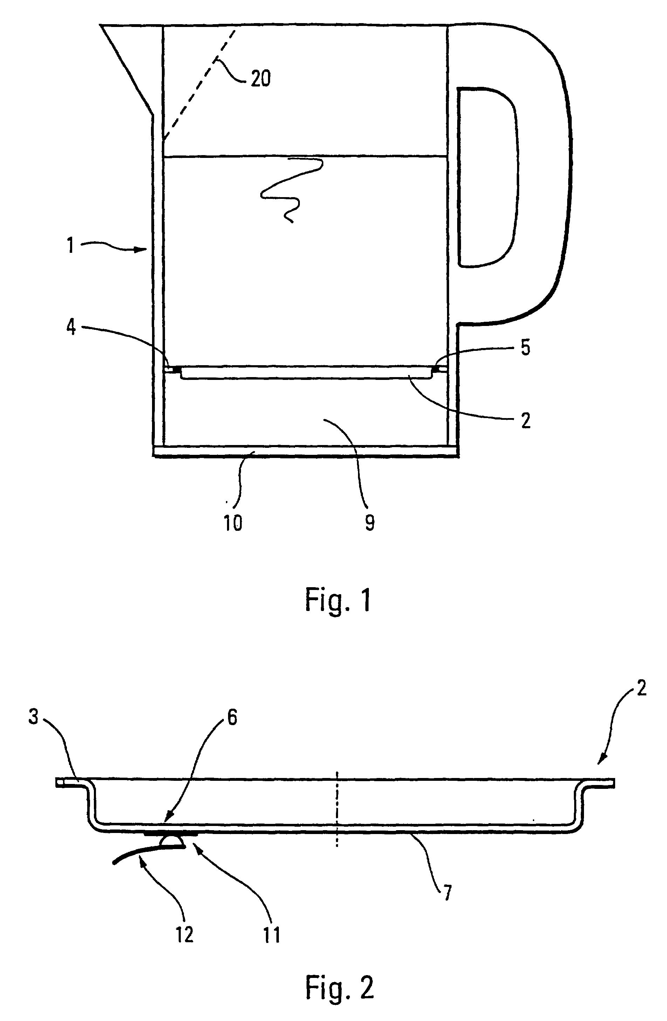

En référence à la figure 1, la bouilloire comprend un corps creux 1, moulé en une matière plastique telle que du polypropylène, sur la paroi extérieure duquel est moulée une poignée de préhension. Le corps 1 présente, diamétralement opposé à la poignée, un évasement de la paroi qui forme un bec verseur.

A proximité du fond 10 du corps 1 de la bouilloire, et parallèlement à celui-ci, s'étend un fond chauffant réalisé sous la forme d'une coupelle 2 en acier inox ferritique, dont le bord 3 repose sur une couronne annulaire 4 moulée sur la paroi intérieure du corps 1. Un joint d'étanchéité 5 est interposé entre la coupelle 2 et son support annulaire 4.

Le fond ou la face supérieure 6 de la coupelle, qui constitue la limite inférieure de remplissage de la bouilloire, est destiné à être en contact avec l'eau.

Conformément à l'invention, un revêtement d'or sur toute cette surface 6 assure un traitement anti-corrosion et anti-tartre, en même temps qu'une finition esthétique.

La face inférieure 7 de la coupelle constitue la paroi supérieure d'une chambre 9 abritant les éléments électriques de connexion de l'élément chauffant, dont seuls certains sont schématisés à la figure 2, car ils relèvent d'une technique connue dans son principe. La description qui suit ne s'attache donc qu'à ceux d'entre eux qui sont concernés par l'invention.

L'élément chauffant, porté par la face inférieure 7, est réalisé sous forme d'une piste résistive dont seule l'une des deux plages 11 constituant les bornes de sortie est matérialisée sur la figure 2. Un contact électrique 12 vient en pression sur chacune de ces plages 11, de manière à permettre la connexion électrique de l'élément chauffant ou piste résistive. Tout comme la face supérieure 6 de la coupelle, les plages 11 ont reçu un traitement à l'or qui améliore leur conductibilité électrique.

Ce traitement à l'or peut se faire par électrolyse ou dépôt chimique. La surface de la coupelle 2 est d'abord préparée par sablage, puis polissage électrochimique. Un masque est appliqué sur la face inférieure 7 pour que seules soient dorées les plages 11 et la face supérieure 6.

L'épaisseur du revêtement d'or peut être très faible, par exemple comprise entre 0,1 et 2 µm.

Dans un premier mode de réalisation de l'invention, le revêtement d'or est appliqué sur une sous-couche d'argent dont l'épaisseur peut être comprise entre 5 et 10 µm.

Dans un autre mode de réalisation, la sous-couche d'argent est précédée d'une sous-couche de cuivre. L'acier inox ferritique du fond chauffant comportant du nickel, on a ainsi une succession de revêtements métalliques à potentiels électro-chimiques décroissants, évitant le phénomène de corrosion par effet de pile.

On constate que grâce au revêtement d'or, l'adhérence du calcaire sur la face supérieure de la coupelle du fond chauffant est faible et qu'il se détache facilement lors d'un simple détartrage.

La majeure partie de la couche de tartre se détachant sous forme de fines particules dans l'eau du récipient, il est avantageux de munir la bouilloire d'un filtre 20 placé en amont du bec verseur, de manière à retenir les éventuelles particules de calcaire libres.

Le fond chauffant de la bouilloire selon l'invention allie ainsi des propriétés anti-corrosion et anti-tartre par un traitement à l'or, métal compatible avec un usage alimentaire. Ce même traitement confère aux plages de la résistance des propriétés électriques satisfaisantes.

Bien que la description se réfère à un élément chauffant réalisé sous forme de piste résistive sérigraphiée, le traitement de la face supérieure du fond chauffant ,selon l'invention s'applique également aux cas où l'élément chauffant est une résistance tubulaire du type mentionné en introduction.

le revêtement d'or selon l'invention, offre la possibilité d'un traitement simultané des plages de la piste résistive, lorsque le fond chauffant comporte une résistance sérigraphiée.

## Revendications

1. Fond chauffant (2) en acier inoxydable ferritique pour récipient destiné à recevoir de l'eau à chauffer, en particulier bouilloire, ce fond chauffant ayant une face supérieure (6) destinée à venir en contact avec l'eau et une face inférieure (7) portant un élément chauffant, **caractérisé en ce que** ladite face supérieure (6) est revêtue d'une couche d'or.

2. Fond chauffant conforme à la revendication 1, **caractérisé en ce que** l'épaisseur du revêtement d'or est comprise entre 0,1 et 2 µm.

3. Fond chauffant conforme à l'une des revendications 1 ou 2, **caractérisé en ce que** ladite face supérieure (6) est revêtue d'une sous-couche d'argent.

4. Fond chauffant conforme à l'une des revendications 1 1 ou 2, **caractérisé en ce que** ladite face supérieure (6) est revêtue successivement d'une sous-couche de cuivre puis d'une sous-couche d'argent.

5. Fond chauffant conforme à l'une des revendications 3 ou 4, **caractérisé en ce que** l'épaisseur de la sous-couche d'argent est comprise entre 5 et 10 µm.

6. Fond chauffant conforme à l'une des revendications 1 à 5, **caractérisé en ce que** l'élément chauffant est une résistance sérigraphiée sur ladite face inférieure (7) et dont les plages (11) permettant la connexion électrique sont dorées à l'or.

7. Fond chauffant conforme à la revendication 6, **caractérisé en ce que** le revêtement d'or est réalisé en une seule opération sur la face supérieure (6) et les plages de la face inférieure (7), par dépôt électrolytique et/ou chimique.

8. Bouilloire électrique comprenant un fond chauffant conforme à l'une des revendications 1 à 7.

9. Bouilloire électrique conforme à la revendication 8, **caractérisée en ce qu'**elle comprend un filtre (20) capable de retenir les particules de calcaire libres dans l'eau.

## Claims

1. Heating base (2) made of ferritic stainless steel for a container designed to receive water for boiling, in particular a kettle, this heating base having an upper face (6) designed to come into contact with the water and a lower face (7) bearing a heating element, **characterized in that** said upper face (6) is coated with a layer of gold.

2. Heating base according to Claim 1, **characterized in that** the thickness of the gold plating is between 0.1 and 2 µm.

3. Heating base according to one of Claims 1 or 2, **characterized in that** said upper face (6) is given an undercoat of silver.

4. Heating base according to one of Claims 1 or 2, **characterized in that** said upper face (6) is successively given an undercoat of copper then an undercoat of silver.

5. Heating base according to one of Claims 3 or 4, **characterized in that** the thickness of the silver undercoat is between 5 and 10 µm.

6. Heating base according to one of Claims 1 to 5, **characterized in that** the heating element is a resistance screen-printed on to said lower face (7), of which the lands (11) allowing electrical connection are gold-plated.

7. Heating base according to Claim 6, **characterized in that** the gold plating is carried out in a single operation on the upper face (6) and the lands of the lower face (7) by electrolytic and/or chemical deposition.

8. Electric kettle having a heating base according to one of Claims 1 to 7.

9. Electric kettle according to Claim 8, **characterized in that** it includes a filter (20) capable of retaining the free particles of fur or sediment in the water.

## Patentansprüche

1. Bodenheizung (2) aus rostfreiem Ferritstahl für einen Behälter zur Aufnahme von zu erhitzendem Wasser, insbesondere für einen Wasserkocher, wobei diese Bodenheizung eine Oberseite (6), die dazu bestimmt ist, mit dem Wasser in Kontakt zu kommen, und eine Unterseite (7), an der ein Heizelement sitzt, aufweist, **dadurch gekennzeichnet, dass** diese Oberseite (6) mit einer Goldschicht beschichtet ist.

2. Bodenheizung nach Anspruch 1, **dadurch gekennzeichnet, dass** die Stärke der Goldbeschichtung zwischen 0,1 und 2 mm beträgt.

3. Bodenheizung nach einem der Ansprüche 1 oder 2, **dadurch gekennzeichnet, dass** die Oberseite (6) mit einer Unterschicht aus Silber beschichtet ist.

4. Bodenheizung nach einem der Ansprüche 1 oder 2, **dadurch gekennzeichnet, dass** die Oberseite (6) nacheinander mit einer Unterschicht aus Kupfer und dann mit einer Unterschicht aus Silber beschichtet wird.

5. Bodenheizung nach einem der Ansprüche 3 oder 4, **dadurch gekennzeichnet, dass** die Stärke der Unterschicht aus Silber zwischen 5 und 10 mm liegt.

6. Bodenheizung nach einem der Ansprüche 1 bis 5, **dadurch gekennzeichnet, dass** das Heizelement ein Siebdruck-Widerstand ist, der an der Unterseite (7) sitzt und sind dessen Bereiche (11), die den elektrischen Anschluss ermöglichen, mit Gold überzogen sind.

7. Bodenheizung nach Anspruch 6, **dadurch gekennzeichnet, dass** die Goldbeschich-tung auf der Oberseite (6) und auf den Bereichen (11) der Unterseite (7) in einem einzigen Arbeitsvorgang durch galvanische und/oder chemische Abscheidung erfolgt.

8. Elektrischer Wasserkocher mit einer Bodenheizung nach einem der Ansprüche 1 bis 7.

9. Elektrischer Wasserkocher nach Anspruch 8, **dadurch gekennzeichnet, dass** er einen Fil-ter (20) aufweist, der geeignet ist, die in dem Wasser frei schwebenden Kalkpartikel aufzufangen.
